# EUROPEAN PATENT SPECIFICATION

(11) **EP 1 558 096 B1**
(45) Date of publication and mention of the grant of the patent: **10.09.2008**
(21) Application number: 03770803.9
(22) Date of filing: 31.10.2003
(51) Int. Cl.: A23L 3/015, A23L 3/00, A23B 5/00

(54) **METHOD AND APPARATUS FOR THE INACTIVATION OF MICROORGANISMS IN LIQUID FOOD AND FEED PRODUCTS**
VERFAHREN UND VORRICHTUNG ZUR INAKTIVIERUNG VON MIKROORGANISMEN IN FLÜSSIGEN NAHRUNGS- UND FUTTERMITTELN
PROCEDE ET DISPOSITIF POUR L'INACTIVATION DE MICRO-ORGANISMES DANS DES ALIMENTS LIQUIDES ET DES ALIMENTS LIQUIDES POUR ANIMAUX

(30) Priority: 31.10.2002 EP 02447205
(43) Date of publication of application: 03.08.2005
(73) Proprietor: LBG Invest & Consulting N.V., 2431 Laakdal (BE)
(72) Inventor: VAN GINNEKEN, Luc, B-2400 MOL (BE); WEYTEN, Herman, B-2100 DEURNE (BE); WILLEMS, Louis, B-2480 DESSEL (BE); LODEWIJCKX, Bert, B-3271 ZICHEM (BE)
(74) Representative: Van Malderen, Joëlle
(86) International application number: PCT/BE2003/000184
(87) International publication number: WO 2004/039180

(56) References cited:
- EP-A- 0 979 657
- WO-A-99/65342
- DE-A- 3 716 942
- DE-A- 3 734 025
- US-A- 5 520 943
- US-A- 5 667 835
- US-A- 5 869 123
- US-A- 6 149 864
- PATENT ABSTRACTS OF JAPAN vol. 2000, no. 26, 1 July 2002 (2002-07-01) -& JP 2001 259002 A (SUGINO MACH LTD), 25 September 2001 (2001-09-25)

## Description

### Field of the invention

The present invention is related to a novel method for inactivating biological contaminants such as micro-organisms, spores and enzymes in liquid food and feed products. More particularly, the method of the present invention concerns the use of pressurised carbon dioxide in a method for inactivating biological contaminants in liquid food and feed products, more particularly products with a high protein and/ or fat content such as liquid whole egg, egg white and egg yolk. The present invention is further related to an apparatus for implementing the method of the invention.

### State of the art

Most traditional inactivation methods consist of heat treatments in some or another way. Pasteurisation is a well known and old technique for reducing the microbial count of foodstuffs and is adapted to the difficult balance between overheating (reducing the foodstuff's organoleptic qualities) and underheating (leading to unsafe and low-quality food products). Therefore, usually a compromise has to be found so that an acceptable and safe product is obtained. US 5,019,408 discloses such a method specifically balanced for ultrapasteurising liquid whole egg products, using continuous flow, high temperature short time pasteurisation and using the equivalent point method for evaluating the end product.

Egg products are difficult to sterilise. These egg products refer to processed products resulting from the processing of eggs or of various components or mixtures of eggs, or from the further processing of such processed products. Their high protein content makes any raw egg product very temperature sensitive. High temperatures, necessary for killing bacteria, very easily lead to reduction of functionality or even coagulation of the egg proteins, which is not desirable for liquid egg (i.e., the unprocessed egg contents after removal of the shell). State-of-the-art methods for sterilising egg products are usually based on thermal pasteurisation techniques. Liquid whole egg can be pasteurised at 60-65°C for 3 to 4 min, leading to a significant reduction of micro-organism contamination. However, some thermoresistant spores of bacteria such as Bacillus cereus can survive this pasteurisation process, especially because the upper temperature of the pasteurisation process is limited by the product characteristics. Further, viscosity of the resulting product is reduced and some denaturation of the egg proteins can be observed which can have important functionality loss as a consequence. Additives to improve the functionality exist but are preferably avoided.

Dairy products, soups, meat preparations, ... show similar problems when their biological contaminants need to be inactivated efficiently. Therefore, a new inactivation method is necessary.

Alternative methods not based on thermal pasteurisation exist for sterilising foodstuffs or equipment. Gamma-irradiation is relatively expensive and customer acceptance for irradiated foodstuffs is low. Pressurised CO₂ has also been used for sterilising purposes. US 6,149,864 discloses a supercritical fluid inactivation method, in which pressurised CO₂ is used for sterilising materials, in particular polymers for drug delivery and implantation. The method disclosed in this document comprises pressure cycling, preferably in the presence of water. The fact that the products that are sterilised are not serving as nutrient source for the contaminants, however, indicates that the products are not easily infected and that growth of any contaminating micro-organisms is very limited. Natural infection and growth such as appears in food and feed products will entail spoilage of the food and feed products.

Wei et al disclose in "Bacterial Effect of High Pressure CO2 Treatment on Foods Spiked with Listeria or Salmonella", Journal of Food Protection, Vol. 54, No. 3, Pages 189-193 (1991) the use of high-pressure CO₂ treatments for controlling pathogenic micro-organisms in model food systems. Mixed results were obtained for different foodstuffs and more importantly, for different micro-organisms. When sterilising egg yolk or liquid whole egg insufficient effect was obtained to provide a safe alternative to pasteurisation. In some cases even increased infection of the foodstuffs was obtained.

Other methods for sterilising liquid food stuffs based on pressurised CO₂ are known from US 5667835, US 5520943, US 5869123 and US5704276. In these methods, the CO₂ is administered through a filter with a predetermined mesh size, leading to CO₂ micro bubbles with a predetermined size. This method is cumbersome to implement and is not applicable to foodstuffs with a high protein and/or fat content due to the high acidification of the treated liquid obtained with this method.

Document DE 3734025 A1 describes a process for enhancing shelf life of water-containing food products using high pressure CO₂ or other inert gases. The described process is however not sufficiently performing to be economically viable, in particular because no high reactor fill percentages can be treated and the reactor time for the food products is much too high or the applied pressure is too high.

### Aims of the invention

The present invention aims to provide a novel method for the inactivation of biological contaminants in liquid foodstuffs, without hampering the functionality of the foodstuff. A further aim is to provide an apparatus for inactivation of biological contaminants in protein and/or fat-containing liquid foodstuffs, more particularly in liquid egg products.

### Summary of the invention

The present invention concerns a method for inactivating biological contaminants in liquid high fat and/ or protein containing food or feed products, comprising the subsequent steps of:
- Providing a reactor vessel arranged to hold liquid or gaseous substances under high pressure,
- Introducing carbon dioxide in said reactor until a pressure of between 20 to 200 bar is achieved at a predetermined temperature between 20 and 100°C,
- Introducing an amount between 20 and 85 % of the total reactor volume of liquid containing biological contaminants to be inactivated in said reactor,
- Optionally introducing an additional amount of carbon dioxide in said reactor to attain a final pressure of between 45 and 350 bar at said predetermined temperature,
- Holding said final pressure and predetermined temperature for a predetermined time while stimulating mass transport in said liquid, and
- Collecting the inactivated liquid.

In the method of the present invention, the liquid is preferably a food or feed product wherein egg is the main ingredient, selected from the group consisting of all combinations of egg yolk (0 to 100%), and egg white (0 to 100%), salted whole egg, sugared whole egg, salted egg yolk, blends of whole egg with preservatives, thickeners and/or food acids, blends of egg yolk with preservatives and/ or food acids, blends of egg white with preservatives, thickeners and/ or food acids, reduced cholesterol egg products and blends thereof, scrambled egg mixes, whole egg with a dry matter between 23.2% and 24.5% and a fat percentage between 9.5% and 12%, egg yolk with a dry matter between 39.5% and 42% and a fat percentage between 24% and 26%, egg white with a dry matter between 11% and 12.5% and a fat percentage between 0 and 2%.

The mass transport is preferably stimulated by stirring, homogenising, pressure pulsing, or shaking.

The method according to the present invention can be implemented as batch process or semi-continuous process.

The biological contamination can comprise micro-organisms and is preferably selected from the group comprising coliform bacteria, enterobacteriaceae and spore-forming bacteria.

Preferably, the final pressure lies between 60 and 150 bar and advantageously is about 100 bar.

Preferably, in the method according to the present invention, the temperature lies between 31 and 50°C and is advantageously about 40°C.

### Short description of the drawings

Fig. 1 represents the general working principle of the high-pressure autoclave according to the present invention.

Fig. 2 represents a set-up for a semi-continuous process according to the present invention.

### Detailed description of the invention

The invention will be further clarified using examples and figures, which should not be considered as limiting the invention as claimed.

### Preparation of contaminants for testing purposes

The examples were carried out with commercially available liquid whole egg products. The products used in the test were provided by Lodewijckx N.V. and comprise pasteurised liquid whole egg (Coco-Vite ^{®}) and unpasteurised liquid whole egg. The liquid whole egg was kept at 0-4°C.

The method was initially tested by spiking pasteurised liquid whole egg with one of three important pathogens that occur regularly as egg product contaminants: *Escherichia coli, Staphylococcus* aureus and *Salmonella enteritidis.*

*E*. *coli* (CM2529) (obtained from Pasteur Institute, Lille, France), *Staphylococcus* aureus (ATCC 6538) and *Salmonella enteritidis* (ATCC 13076) were cultivated separately in 869-medium (10 g tryptone, 5 g yeast extract, 5 g NaCl, l g glucose D+ and 0.345 g CaCl₂. 2H₂O per litre deionised water, equilibrated to pH 7 with 40 % NaOH). 1.5 % agar was added to the medium in case plating out was necessary. The medium was autoclaved at 120°C for 15 minutes. A pre-culture of about 10 ml bacteria broth in 869 medium was prepared the day before testing.

Infection of spiked liquid whole egg was tested and quantified by plating out either 50 µl (for *E*. *coli*) or 100 µl (for *S. enteritidis* and S. *aureus*) in petridishes with 869 medium. Detection limit of these tests was thus 20 cfu/ml (1 colony/ dish) or 10 cfu/ml (1 colony/dish), respectively.

### General working principle for testing

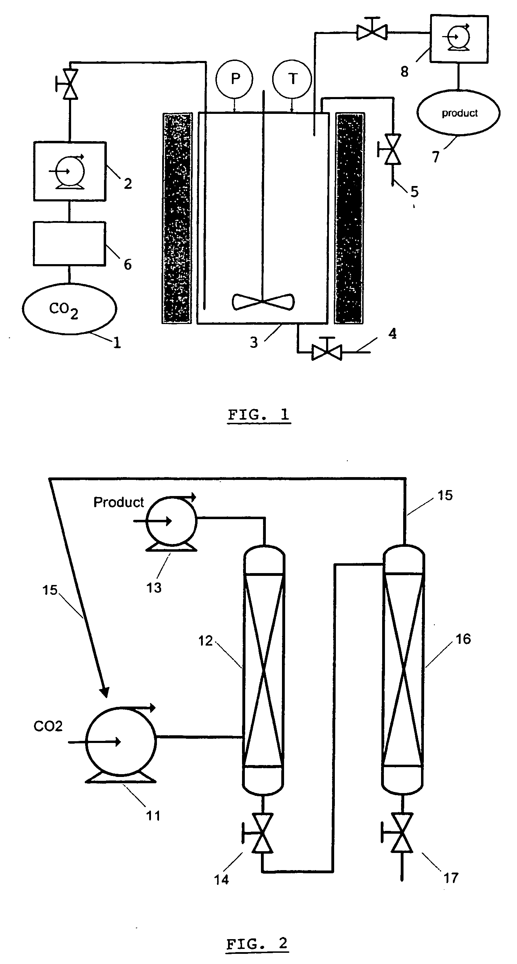

The general working principle of the high-pressure autoclave is shown in fig. 1. Liquid CO₂ (1) is cooled via cooler 6 and pumped with a high pressure pump 2 in the heated and stirred autoclave 3 until a certain pressure is achieved (generally 50-60 bar). The liquid to be inactivated (7) is then introduced into the autoclave by means of a high pressure pump 8, after which an additional amount of CO₂ is pumped into the autoclave to reach the desired inactivation pressure. After the inactivation protocol has been followed, the inactivated liquid is collected in a sterile manner by opening outlet 4 at the prevailing inactivation pressure. Then, the remaining carbon dioxide is brought to atmospheric pressure via a pressure reduction valve and carbon dioxide outlet 5.

The inactivation effect of the pressurised carbon dioxide is evaluated by determining the number of living cells before and after the experiment by counting the number of colonies growing on the agar petridishes.

All the experiments in the given examples are performed at 40°C (unless stated otherwise). The results of these experiments are given in table II. Table I describes what data are represented in table II.

**Table I:**

| **Symbol** | **Data represented** |
|---|---|
| **A** | Reactor volume in ml |
| **B** | Liquid Volume (to be sterilised) in ml |
| **C** | Percentage liquid in the reactor volume |
| **D** | Stirring frequency in min⁻¹ |
| **E** | Working pressure in bar |
| **F** | Working temperature in °C |
| **G** | Working time in minutes |
| **H** | Micro-organism contamination type |
| **I** | Micro-organism contamination count in cfu/ml |
| **J** | Control count |
| **K** | Count after inactivation in cfu/ml |
| **L** | Inactivation degree = -log (K/I) |

### Example 1: initial testing with E. coli:

In experiments 1 to 13, a series of experiments is given where 10 ml of liquid whole egg, spiked with E. coli, was introduced into a 200 ml reactor (5% fill percentage). This reactor was stirred at a frequency of about 100 min⁻¹, while different pressure and time conditions were applied. The results clearly show that the inactivation efficiency is sufficient over a broad range. A complete inactivation can be obtained at 70 bar after 30 minutes.

In experiments 14 to 16, the influence of the fill percentage on the inactivation efficiency was examined. These experiments were conducted by introducing varying amounts of liquid whole egg, contaminated with *E*. *coli*, into a 200 ml reactor, and applying a final pressure of 80 bar for 60 minutes while stirring at a frequency of about 100 min⁻¹. The results show that it is possible to obtain a complete inactivation of *E*. *coli* with a reactor fill percentage of 40%.

Other well known mass transport stimulating measures can be taken besides stirring, such as homogenisation, pressure pulsing, or shaking.

### Example 2: testing with other micro-organisms:

It is important that all pathogenic micro-organisms can be inactivated by an inactivation process. Therefore, some tests were conducted using *S*. *aureus* and *S*. *enteritidis* (experiments 17 to 19). The results show that it is possible to completely inactivate all tested micro-organisms with a fill percentage of 40%. Higher pressures and/ or longer inactivation times, however, are needed to inactivate S. *aureus,* as compared to *E*. *coli* and S. *enteritidis.*

In experiment 20, a combination of the three previously tested micro-organisms (*E*. *coli*, *S*. *aureus* and *S*. *enteritidis*) was used to contaminate the pasteurised whole egg liquid. Results show that complete inactivation of the combined contamination is possible.

### Example 3: further testing with S. aureus:

From the previous examples it follows that it was more difficult to inactivate the (Gram-positive) *S*. *aureus* micro-organism, as compared to the (Gram-negative) *E*. *coli* and *S*. *enteritidis* micro-organisms. Therefore, some further testing with S. *aureus* was undertaken.

In experiment 21, a 1000 ml reactor volume is used, filled with CO₂ pressurised at about 60 bar. Next, 450 ml of (S. aureus-spiked) liquid whole egg (45% fill percentage) is pumped into the reactor, which is stirred at a frequency of about 1500 min⁻¹. The results clearly show that a complete inactivation can be obtained at 110 bar after 60 minutes of treatment.

In experiments 22 and 23, modus operandi was essentially the same as in experiment 21. The liquid was stirred at about 500 min⁻¹ and kept under a pressure of approximately 100 bar for 33 and 15 minutes, respectively. A high inactivation degree can be observed, even under heavy contaminant loads and a short inactivation time (exp. 23).

To be economically viable, the fill percentage of the reactor has to be as high as possible. Therefore, experiments 24 to 28 were conducted by introducing varying amounts of pasteurised liquid whole egg (spiked with *S*. *aureus*) into a 1000 ml reactor, and applying a CO₂ pressure of about 100-110 bar for 30 minutes, while stirring at a frequency of about 500 min⁻¹. The results show that it is possible to obtain a complete inactivation with a reactor fill percentage of 80 %.

In experiment 29, the influence of stirring speed was examined. A reduced stirring speed, compared to experiment 26, under higher contamination load conditions still provides complete inactivation.

Experiments 30 and 31 show that, in comparison with experiment 29, even higher contamination loads can be inactivated completely with the process according to the invention.

Other well known mass transport stimulating measures can be taken besides stirring, such as homogenisation, pressure pulsing, or shaking.

### Example 4: inactivation of biological contaminants in unpasteurised liquid whole egg

Inactivation of biological contaminants in unpasteurised liquid whole egg was tested with the process according to the present invention. A test was performed on different samples, as unpasteurised liquid whole egg does not always present a uniform contamination pattern. Counts of total cfu/ml, *Enterobacteriaceae* and coliform/*E*. *coli* contamination were conducted before and after applying different treatment conditions.

Some indicative results are shown in table III. Experiments 32 and 33 were conducted by introducing 80 ml of unpasteurised liquid whole egg into a 200 ml reactor (40% fill percentage), and applying a CO₂ pressure of 100 bar for 240 minutes, while stirring at a frequency of about 100 min⁻¹. Experiment 34 was conducted by introducing 600 ml of unpasteurised liquid whole egg into a 1000 ml reactor (60% fill percentage), and applying a CO₂ pressure of 100 bar for 30 minutes, while stirring at a frequency of about 400 min⁻¹. A sufficient inactivation is obtained for the total contaminant population. In addition, a complete inactivation of *Enterobacteriaceae* and coliform/*E*. *coli* contaminants is obtained.

It is clear that these experiments are only indicative for an industrial reduction to practice. The skilled person can easily adapt the process parameters to obtain suitable inactivation efficiency.

### Example 5: implementation as a semi-continuous process

It is also possible to use a semi-continuous process for the inactivation according to the invention. Figure 2 shows a set-up for an industrial-size batch/semicontinuous process. The installation comprises a reactor 12 and a separator 16. A high pressure pump 11 for the carbon dioxide is also shown. The liquid to be sterilised is brought into the reactor at the top by means of a high pressure pump 13. Sterilised liquid is led out of the reactor into the separator by opening the bottom outlet 14 in order to separate the dissolved CO₂ from the sterilised liquid. CO₂ is recycled via outlets 15, while sterilised liquid can be collected at the bottom outlet 17.

A preferred process can be envisaged with the set-up of figures 1 and 2:
- Loading the reactor with CO₂.
- Loading the reactor with liquid by means of a high-pressure pump.
- Adding an additional amount of CO₂.
- Stirring the reactor for a predetermined period of time, possibly combined with pressure pulses.
- Introducing the sterilised liquid into the separator.
- Separating dissolved CO₂ from the sterilised liquid.
- Venting or recycling the separated CO₂.
- Collecting the sterilised product.

In this embodiment of the process, a large amount of CO₂ remains in the reactor with minimal pressure loss, and hence can be re-used to process the next batch of liquid.

A series of experiments was performed in semi-continuous mode during a time-span of 5 days using unpasteurised liquid whole egg. On day 1, liquid CO₂ was cooled and pumped with a high pressure pump in a heated (40°C) autoclave until a pressure of about 50-60 bar was achieved. Then, 600 ml of unpasteurised liquid whole egg was introduced into a 1000 ml autoclave (60% fill percentage) by means of a high pressure pump, while stirring at a frequency of about 400 min⁻¹. Subsequently, an additional amount of CO₂ was pumped into the autoclave to reach an inactivation pressure of about 100 bar. After an inactivation time of 60 minutes, stirring was stopped and the inactivated liquid was collected in a sterile manner by opening the outlet valve at the prevailing inactivation pressure (about 100 bar). When the pressure in the reactor reached about 60 bar, the outlet valve was closed in order to retain a large amount of CO₂ (which was re-used to process the next batch of liquid) in the reactor. At that time, almost all of the sterilised liquid (about 600 ml) was collected. Then, an additional amount of CO₂ was pumped into the reactor until a pressure of about 100 bar was reached. The reactor was then left overnight at a temperature of 40°C. Finally, the treated and untreated liquid whole egg was analysed for bacterial contamination (total cfu/ml, *Enterobacteriaceae* and coliform/*E*. *coli* counts).

On day 2, before starting a new experiment, CO₂ pressure in the reactor was released until a pressure of about 60 bar was reached. From then on, the modus operandi was the same as described for day 1. This way of processing was repeated for another 3 days, so that during a time-span of 5 days a total of 5 batches of unpasteurised liquid whole egg were treated.

The results are shown in table IV. Experiment 35 was performed on day 1, while experiments 36 and 37 were performed on days 4 and 5, respectively. A more than sufficient inactivation is obtained for the contaminant population present. More importantly, even if the reactor is kept overnight at 40°C, the performance of the invention does not change.

It is clear to the person skilled in the art that the inactivation process can easily be divided into different stages. A short high pressure batch process combined with a lower pressure batch process or any other combination can lead to an effective inactivation process. These alternative methods are known to the skilled person and do not depart from the present invention as disclosed.

### Example 6: functionality test:

Carbon dioxide, high pressure, high temperature and mechanical forces have an influence on the denaturation of proteins. It was therefore important to verify whether liquid egg products are still functional after an inactivation process according to the present invention.

Therefore, on a regular basis, samples of treated pasteurised and unpasteurised liquid whole egg (obtained throughout experiments 21-37) were used in a baking test.

For the baking test, a cake was prepared according to the following recipe: 250 g of sugar is added to 400 g of eggs or liquid whole egg. The mixture is whipped until a predetermined volume is reached. 250 g of flour is then slowly added while mixing gently. The obtained dough is baked during 20 minutes at 180°C.

Fresh eggs, thermally pasteurised liquid whole egg and liquid whole egg inactivated with the process according to the invention as mentioned above were tested on time needed to obtain the predetermined volume when whipping the egg/ sugar mixture, baked volume, aspect, odour, colour and taste. No significant differences between the three products were observed.

**Table II: Overview of experiments, performed on spiked, pasteurised liquid whole egg**

| | A | B | C | D | E | F | G | H | I | J | K | L |
|---|---|---|---|---|---|---|---|---|---|---|---|---|
| | ml | ml | % | Min⁻¹ | bar | °C | min | | Cfu/ml | | | |
| 1 | 200 | 10 | 5 | 100 | 150 | 40 | 160 | E. coli | 3,00E+07 | <20 | <20 | >6,2 |
| 2 | 200 | 10 | 5 | 100 | 150 | 40 | 15 | E. coli | 4,30E+06 | <20 | <20 | >5,3 |
| 3 | 200 | 10 | 5 | 100 | 150 | 40 | 90 | E. coli | 4,30E+06 | <20 | <20 | >5,3 |
| 4 | 200 | 10 | 5 | 100 | 150 | 40 | 120 | E. coli | 4,30E+06 | <20 | <20 | >5,3 |
| 5 | 200 | 10 | 5 | 100 | 150 | 40 | 30 | E. coli | 2,90E+07 | <20 | <20 | >6,2 |
| 6 | 200 | 10 | 5 | 100 | 100 | 40 | 130 | E. coli | 2,90E+07 | <20 | <20 | >6,2 |
| 7 | 200 | 10 | 5 | 100 | 100 | 40 | 60 | E. coli | 2,90E+07 | <20 | <20 | >6,2 |
| 8 | 200 | 10 | 5 | 100 | 70 | 40 | 60 | E. coli | 5,50E+06 | <20 | 20 | 5,4 |
| 9 | 200 | 10 | 5 | 100 | 80 | 40 | 60 | E. coli | 5,50E+06 | <20 | <20 | >5,4 |
| 10 | 200 | 10 | 5 | 100 | 80 | 40 | 90 | E. coli | 2,20E+07 | <20 | <20 | >6,0 |
| 11 | 200 | 10 | 5 | 100 | 80 | 40 | 120 | E. coli | 2,20E+07 | <20 | <20 | >6,0 |
| 12 | 200 | 10 | 5 | 100 | 70 | 40 | 60 | E. coli | 2,20E+07 | <20 | <20 | >6,0 |
| 13 | 200 | 10 | 5 | 100 | 70 | 40 | 30 | E. coli | 2,20E+07 | <20 | <20 | >6,0 |
| 14 | 200 | 20 | 10 | 100 | 80 | 40 | 60 | E. coli | 3,60E+05 | <20 | <20 | >4,3 |
| 15 | 200 | 40 | 20 | 100 | 80 | 40 | 60 | E. coli | 3,60E+05 | <20 | <20 | >4,3 |
| 16 | 200 | 80 | 40 | 100 | 80 | 40 | 60 | E. coli | 2,80E+07 | <20 | <20 | >6,1 |
| 17 | 200 | 80 | 40 | 100 | 80 | 40 | 60 | S. enteritidis | 3,00E+07 | 30 | <10 | >6,5 |
| 18 | 200 | 80 | 40 | 100 | 150 | 40 | 240 | S. aureus | 2,40E+07 | <10 | <10 | >6,4 |
| 19 | 200 | 80 | 40 | 100 | 100 | 40 | 240 | S. aureus | 5,50E+06 | <10 | <10 | >5,7 |
| 20 | 200 | 80 | 40 | 100 | 100 | 40 | 240 | E. coli + S. aureus + S. enteritidis | 3,10E+07 | >1000 | <10 | >6,5 |
| 21 | 1000 | 450 | 45 | 1500 | 110 | 40 | 60 | S. aureus | 5,00E+05 | | <10 | >4,7 |
| 22 | 1000 | 400 | 40 | 503 | 102 | 39 | 33 | S. aureus | 5,40E+05 | <10 | <10 | >4,7 |
| 23 | 1000 | 400 | 40 | 502 | 104 | 39 | 15 | S. aureus | 3,40E+07 | <10 | 20 | 6,2 |
| 24 | 1000 | 600 | 60 | 503 | 100 | 40 | 30 | S. aureus | 4,50E+07 | <10 | <10 | >6,7 |
| 25 | 1000 | 700 | 70 | 504 | 106 | 40 | 30 | S. aureus | 1,70E+07 | <10 | <10 | >6,2 |
| 26 | 1000 | 750 | 75 | 503 | 110 | 40 | 30 | S. aureus | 1,20E+07 | <10 | <10 | >6,1 |
| 27 | 1000 | 800 | 80 | 503 | 105 | 40 | 30 | S. aureus | 2,10E+07 | <10 | <10 | >6,3 |
| 28 | 1000 | 800 | 80 | 502 | 109 | 40 | 30 | S. aureus | 2,00E+07 | <10 | <10 | >6,3 |
| 29 | 1000 | 750 | 75 | 400 | 105 | 40 | 30 | S. aureus | 2,20E+07 | <10 | <10 | >6,3 |
| 30 | 1000 | 750 | 75 | 405 | 105 | 41 | 30 | S. aureus | 3,60E+07 | <10 | <10 | >6,6 |
| 31 | 1000 | 750 | 75 | 400 | 106 | 41 | 30 | S. aureus | 7,80E+07 | <10 | <10 | >6,9 |

**Table III: Overview of experiments, performed on unpasteurised liquid whole egg**

| | Initial contamination (cfu/ml) | | | final contamination (cfu/ml) | | | L |
|---|---|---|---|---|---|---|---|
| | Total | Enterob. | E. coli/coliform | Total | Enterob. | E. coli/coliform | |
| 32 | 1,5E+05 | 4,7E+04 | -/- | 10 | <10 | -/- | 4,2 |
| 33 | 1,8E+04 | 8,8E+03 | 1,5E+03/3,1E+03 | 10 | <10 | <10/<10 | 3,3 |
| 34 | 1,2E+06 | 2,6E+03 | 5,0E+03/1,0E+03 | 80 | <10 | <10/<10 | 4,2 |

**Table IV: Overview of experiments, performed in semi-continuous mode**

| | Initial contamination (cfu/ml) | | | final contamination (cfu/ml) | | | L |
|---|---|---|---|---|---|---|---|
| | Total | Enterob. | E. coli/coliform | Total | Enterob. | E. coli/coliform | |
| 35 | 2,4E+05 | 5,9E+04 | 7,5E+03/8,6E+03 | 70 | <10 | <10/<10 | 3,5 |
| 36 | 6,7E+05 | 9,2E+04 | 2,0E+03/2,8E+04 | 70 | <10 | <10/<10 | 4,0 |
| 37 | 5,2E+05 | 1,5E+05 | 1,5E+04/1,2E+04 | 65 | <10 | <10/<10 | 3,9 |

## Claims

1. A method for inactivating biological contaminants in liquid high fat and/ or protein containing food or feed products, comprising the subsequent steps of:
• Providing a reactor vessel arranged to hold liquid or gaseous substances under high pressure,
• Introducing carbon dioxide in said reactor until a pressure of between 20 to 200 bar is achieved at a predetermined temperature between 20 and 100°C,
• Introducing an amount between 20 and 85 % of the total reactor volume of liquid containing biological contaminants to be inactivated in said reactor,
• Optionally introducing an additional amount of carbon dioxide in said reactor to attain a final pressure of between 45 and 350 bar at said predetermined temperature,
• Holding said final pressure and predetermined temperature for a predetermined time while stimulating mass transport in said liquid, and
• Collecting the inactivated liquid.

2. The method as in claim 1, wherein the liquid is a food or feed product wherein egg is the main ingredient, selected from the group consisting of all combinations of egg yolk (0 to 100%), and egg white (0 to 100%), salted whole egg, sugared whole egg, salted egg yolk, blends of whole egg with preservatives, thickeners and/or food acids, blends of egg yolk with preservatives and/ or food acids, blends of egg white with preservatives, thickeners and/ or food acids, reduced cholesterol egg products and blends thereof, scrambled egg mixes, whole egg with a dry matter between 23.2% and 24.5% and a fat percentage between 9.5% and 12%, egg yolk with a dry matter between 39.5% and 42% and a fat percentage between 24% and 26%, egg white with a dry matter between 11% and 12.5% and a fat percentage between 0 and 2%.

3. The method as in claim 1 or 2, wherein the mass transport is stimulated by stirring, homogenising, pressure pulsing, or shaking.

4. The method as in any of the claims 1 to 3, wherein the method is implemented as a process selected from the group consisting of batch process or semi-continuous process.

5. The method as in any of the claims 1 to 4, wherein the biological contamination comprises micro-organisms.

6. The method as in any of the claims 1 to 5, wherein said biological contamination is selected from the group comprising coliform bacteria, enterobacteriaceae and spore-forming bacteria.

7. The method as in any of the claims 1 to 6, wherein the final pressure lies between 60 and 150 bar.

8. The method as in any of the claims 1 to 7, wherein the final pressure is about 100 bar.

9. The method as in any of the claims 1 to 8 wherein the temperature lies between 31 and 50°C.

10. The method as in any of the claims 1 to 9 wherein the temperature is about 40°C.

## Patentansprüche

1. Verfahren zur Inaktivierung biologischer Kontaminanten in flüssigen Nahrungs- und/oder Futtermitteln mit hohem Fett-oder Proteingehalt, umfassend die folgenden Schritte:
- Bereitstellung eines Reaktorgefäßes, das zum Fassen von flüssigen oder gasförmigen Substanzen unter Hochdruck eingerichtet ist,
- Einführen von Kohlenstoffdioxid in den Reaktor, bis ein Druck zwischen 20 und 200 bar bei einer vorher festgelegten Temperatur zwischen 20 und 100° C erreicht wird,
- Einführen in den Reaktor, zu einem Anteil zwischen 20% und 85% des Gesamtvolumens des Reaktorgefäßes, einer Flüssigkeit, die biologische Kontaminanten enthält, welche inaktiviert werden sollen,
- Wahlweise einführen eines zusätzlichen Anteils von Kohlenstoffdioxid in den Reaktor zum Erreichen eines endgültigen Drucks zwischen 45 und 350 bar bei der vorher festgelegten Temperatur,
- Aufrechterhaltung des endgültigen Drucks und der vorher festgelegten Temperatur für eine vorher festgelegte Zeit, währenddessen Stimulierung des Massentransports in der Flüssigkeit, und
- Aufsammeln der inaktivierten Flüssigkeit.

2. Verfahren nach Anspruch 1, wobei die Flüssigkeit ein Nahrungs- oder Futtermittel ist, dessen Hauptzutat Ei ist, ausgewählt aus der Gruppe bestehend aus allen Kombinationen von Eigelb (0% bis 100%) und Eiweiß (0% bis 100%), gesalzenem ganzem Ei, gezuckertem ganzem Ei, gesalzenem Eigelb, Mischungen zwischen ganzem Ei mit Konservierungs-, Verdickungs- und/oder Säuerungsmitteln, Mischungen zwischen Eigelb mit Konservierungs- und/oder Säuerungsmitteln, Mischungen zwischen Eiweiß mit Konservierungs-, Verdickungs- und/oder Säuerungsmitteln, cholesterinreduzierte Eiprodukte und Mischungen davon, Rühreigemische, ganzes Ei mit einer Trockenmasse zwischen 23.2% und 24,5% and einem Fettanteil zwischen 9,5% und 12%, Eigelb mit einer Trockenmasse zwischen 39.5% und 42% and einem Fettanteil zwischen 24% und 26%, Eiweiß mit einer Trockenmasse zwischen 11% und 12,5% and einem Fettanteil zwischen 0% und 2%.

3. Verfahren nach Anspruch 1 oder 2, wobei der Massetransport durch Rühren, Homogenisieren, Druckpulsen oder Schütteln stimuliert wird.

4. Verfahren nach irgendeinem der Ansprüche 1 bis 3, wobei das Verfahren als Prozess, ausgewählt aus der Gruppe bestehend aus schubweisem Verarbeitungsprozess oder semikontinuierlichem Verarbeitungsprozess, umgesetzt wird.

5. Verfahren nach irgendeinem der Ansprüche 1 bis 4, wobei die biologische Kontamination Mikroorganismen umfasst.

6. Verfahren nach irgendeinem der Ansprüche 1 bis 5, wobei die biologische Kontamination ausgewählt wird aus der Gruppe bestehend aus coliformen Bakterien, Enterobakterien und Sporen bildenden Bakterien.

7. Verfahren nach irgendeinem der Ansprüche 1 bis 6, wobei der endgültige Druck zwischen 60 und 150 bar liegt.

8. Verfahren nach irgendeinem der Ansprüche 1 bis 7, wobei der endgültige Druck bei etwa 100 bar liegt.

9. Verfahren nach irgendeinem der Ansprüche 1 bis 8, wobei die Temperatur zwischen 31 und 50° C bar liegt.

10. Verfahren nach irgendeinem der Ansprüche 1 bis 9, wobei die Temperatur bei etwa 40° C liegt.

## Revendications

1. Procédé pour inactiver des contaminants biologiques dans des produits alimentaires liquides pour êtres humains ou animaux à haute teneur en matière grasse et/ou en protéines, comprenant les étapes suivantes :
• fournir une cuve de réacteur conçue pour contenir des substances liquides ou gazeuses sous haute pression,
• introduire du dioxyde de carbone dans ledit réacteur jusqu'à obtention d'une pression comprise entre 20 et 200 bars à une température prédéterminée comprise entre 20 et 100°C,
• introduire dans ledit réacteur une quantité de liquide comprise entre 20 et 85 % du volume total du réacteur et contenant des contaminants biologiques à inactiver,
• introduire éventuellement une quantité supplémentaire de dioxyde de carbone dans ledit réacteur pour atteindre une pression finale comprise entre 45 et 350 bars à ladite température prédéterminée,
• maintenir ladite pression finale et ladite température prédéterminée pendant une période prédéterminée tout en stimulant le transfert de masse dans ledit liquide, et
• récupérer le liquide inactivé.

2. Procédé selon la revendication 1, dans lequel le liquide est un produit alimentaire pour être humains ou animaux dans lequel l'oeuf est l'ingrédient principal, sélectionné dans le groupe constitué de toutes les combinaisons de jaune d'oeuf (0 à 100 %) et de blanc d'oeuf (0 à 100%), d'oeuf entier salé, d'oeuf entier sucré, de jaune d'oeuf salé, de mélanges d'oeuf entier avec des conservateurs, des épaississants et/ou des acides alimentaires, de mélanges de jaune d'oeuf avec des conservateurs et/ou des acides alimentaires, de mélanges de blanc d'oeuf avec des conservateurs, des épaississants et/ou des acides alimentaires, de produits aux oeufs allégés en cholestérol et des mélanges de ceux-ci, de mélanges d'oeufs brouillés, d'oeuf entier avec une teneur en matière sèche comprise entre 23,2 % et 24,5 % et un pourcentage de matière grasse compris entre 9,5% et 12 %, de jaune d'oeuf avec une teneur en matière sèche comprise entre 39,5 % et 42 % et un pourcentage de matière grasse compris entre 24 % et 26 %, de blanc d'oeuf avec une teneur en matière sèche comprise entre 11 % et 12,5 % et un pourcentage de matière grasse compris entre 0 % et 2 %.

3. Procédé selon la revendication 1 ou 2, dans lequel le transfert de masse est stimulé par agitation, homogénéisation, impulsions de pression ou secouage.

4. Procédé selon l'une quelconque des revendications 1 à 3, dans lequel le procédé est mis en oeuvre comme un procédé sélectionné dans le groupe constitué des procédés discontinu ou semi-continu.

5. Procédé selon l'une quelconque des revendications 1 à 4, dans lequel la contamination biologique comprend des microorganismes.

6. Procédé selon l'une quelconque des revendications 1 à 5, dans lequel la contamination biologique est sélectionnée dans le groupe constitué des bactéries coliformes, des enterobacteriaceae et des bactéries sporulées.

7. Procédé selon l'une quelconque des revendications 1 à 6, dans lequel la pression finale est comprise entre 60 et 150 bars.

8. Procédé selon l'une quelconque des revendications 1 à 7, dans lequel la pression finale est d'environ 100 bars.

9. Procédé selon l'une quelconque des revendications 1 à 8, dans lequel la température est comprise entre 31 et 50°C.

10. Procédé selon l'une quelconque des revendications 1 à 9, dans lequel la température est d'environ 40°C.
